# NEW EUROPEAN PATENT SPECIFICATION

(11) **EP 1 620 278 B2**
(45) Date of publication and mention of the opposition decision: **11.05.2011**
(45) Mention of the grant of the patent: 13.06.2007
(21) Application number: 04750659.7
(22) Date of filing: 26.04.2004
(51) Int. Cl.: B60H 1/00

(54) **EVAPORATOR SECTION FOR A MODULAR BUS AIR CONDITIONER**
VERDAMPFERTEIL FÜR EINE MODULARE BUSKLIMAANLAGE
UNITE D'EVAPORATEUR POUR CLIMATISEUR DE BUS MODULAIRE

(30) Priority: 05.05.2003 US 429423
(43) Date of publication of application: 01.02.2006
(73) Proprietor: CARRIER CORPORATION, Farmington, Connecticut 06034-4015 (US)
(72) Inventor: BUSHNELL, Peter, R., Cazenovia, NY 13035 (US)
(74) Representative: Booth, Catherine Louise
(86) International application number: PCT/US2004/012816
(87) International publication number: WO 2004/098928

(56) References cited:
- DE-A- 19 913 776
- DE-C2- 4 435 292
- US-A- 4 679 616
- US-A1- 2002 073 723
- US-B1- 6 282 912

## Description

### Background of the Invention

This invention relates generally to air conditioning systems and, more particularly, to an air conditioning system for the rooftop of a bus.

The most common approach for air conditioning a bus is to locate the air conditioning components on the rooftop thereof. Inasmuch as power is available from the engine that drives the bus, it has become common practice to locate the air conditioning compressor near the drive engine such that the drive engine is drivingly connected to the compressor, with the compressor then being fluidly interconnected to the air conditioning system on a rooftop of a bus. This, of course, requires rather extensive piping between the engine compartment and the air conditioning unit, thereby increasing installation and maintenance costs.

Another problem with such existing systems is that the speed that the compressor is driven is dependent on the speed in which the drive engine is running. Thus, when the drive engine is idling in a parking lot, for example, the compressor is running at a relatively slow speed which may not be sufficient to provide the desired degree of air conditioning. It is therefore generally necessary to oversize the compressor in order to obtain the performance needed under these conditions.

Others problems associated with such a motor driven compressor system is that the open drive compressor needs a shaft seal and a mechanical clutch, both of which are subject to maintenance problems. Further, since DC power is available on a bus, DC motors have been used for the air conditioning system. In general, DC motors are not as reliable as AC motors since they have brushes that wear out, and brushless motors are relatively expensive.

In addition to the problems discussed hereinabove, it is recognized, that because the wide variety of bus types and application requirements, it has been necessary to provide many different types and variations of air conditioning systems in order to meet these different requirements and vehicle interfaces. As a result, the manufacturing and installation costs, and sustaining engineering resources that are necessary in order to properly maintain and service these units, are relatively high.

Traditionally, the condenser coils and fans have been located near the centerline of the bus rooftop, whereas the evaporator coils and fans are closer to the lateral sides of the rooftop. Further, the evaporator fans are of the draw- through type wherein the evaporator fans are placed downstream of the coils and act to draw the conditioned air from the coils. This provides a uniform velocity distribution at the coil but leads to undesirable high jet flow leaving the fan and subsequently pushing into the bus ducting system. Also, because of the need to have the fan outboard of the coil, it has been necessary to place the coil more toward the center of the bus than might be otherwise desired.
Prior art air conditioning systems are disclosed in US 6282912 and DE-4435292C which describe a system installed in a vehicle roof. EP 0613796 discloses an air conditioned bus.

It is therefore an object of the present invention to provide an improved bus rooftop air conditioning system and in particular to improve the introduction of fresh air to be mixed with the flow of return air.

Another object of the present invention is the provision for a bus air conditioning system which is effective at all engine operating speeds of the bus, while at the same time does not require an oversized compressor.

Yet another object of the present invention is the provision for reducing the manufacturing, installation, and maintenance costs of a bus air conditioning system.

Still another object of the present invention is the provision in an evaporator section of a bus rooftop air conditioning system for locating the evaporator coil more toward the lateral edges of the bus.

Yet another object of the present invention is the provision for a bus rooftop air conditioning system which is economical to manufacture and effective in use.

These objects and other features and advantages become more readily apparent upon reference to the following descriptions when taken in conjunction with the appended drawings.

### Summary of the Invention

Briefly, in accordance with one aspect of the invention, there is provided an air conditioning module as claimed in claim 1. In its preferred embodiments at last, the module is assembled with its condenser coil, evaporator coil and respective blowers located within the module and so situated that a standard module can accommodate various installation interfaces with different types and locations of return air and supply air ducts on a bus.

Preferably, each of a plurality of modules are installed in a centered relationship with respect to a longitudinal centerline of the bus and extend transversely across the, width of the bus. The number and length of modules is dependent of the total air conditioning capacity requirement of the bus.

Preferably each of the modules include all the necessary components with electrical power being provided to the electrical components by an inverter/controller that is powered by an engine driven generator.

By another aspect of the invention, the evaporator blower is placed inboard of the evaporator coils and acts to blow air from the return air duct through the coils to be cooled.

Preferably the evaporator section of the module has a return air plenum that spans a substantial width of the bus to thereby accommodate various sizes and types of return air interface requirements.

Preferably the evaporator section of each module has two different vertical levels to accommodate the respective incoming flows of return air and replenishing fresh air, and includes a mixer for selectively varying the amount of each which passes to the fan and then to the evaporator coil.
In accordance with another aspect of the invention, there is provided a bus rooftop air conditioner module as claimed in claim 12.

In the drawings as hereinafter described, a preferred embodiment is depicted; however various other modifications and alternate constructions can be made thereto without departing from the scope of the invention.

### Brief Description of the Drawings

FIG. 1 is a perspective view of a module as installed on the rooftop of a bus in accordance with a preferred embodiment of the invention.

FIG. 2 is a perspective view of a module with the top cover removed.

FIG. 3 is a schematic illustration of the electrical and refrigerant circuits within the module in accordance with the preferred embodiment of the invention.

FIG. 4 is a front elevational view of the condenser section of the module.

FIG. 5 is a front elevational view one embodiment of the evaporator section of the module.

FIGS. 6-8 are front elevational views of the evaporator section as applied to different types of bus rooftops.

FIG. 9 is a top view of an alternate evaporator section.

FIG. 10 is a sectional view thereof as seen along lines 10-10 of Fig. 9.

FIG. 11 is a sectional view thereof as seen along lines 11-11 of Fig. 9.

FIG. 12 is a top view of yet another embodiment of an evaporator section.

FIG. 13 is a sectional view thereof as seen along lines 13-13 of Fig. 12.

FIG. 14 is a sectional view as seen along lines 14-14 of Fig. 12.

### Description of the Preferred Embodiment

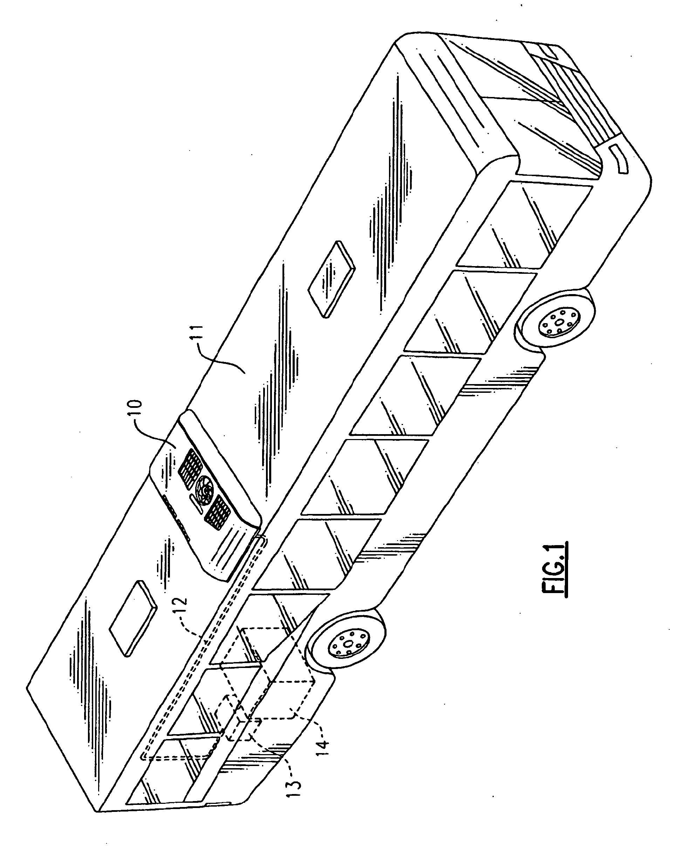

The inventive module is shown generally at 10 in Fig. 1 as applied to the rooftop 11 of a bus in accordance with the present invention. Electrical power is provided to the module 10 by way of line 12, which in turn receives its power from a generator 13 driven by the bus engine 14 as shown.

The module 10 interfaces with openings in the bus top so that fans within the module 10 cause the return air from the passenger compartment to flow upward into the module 10 where it is conditioned, and the conditioned air to then flow downwardly into supply air ducts that carry the conditioned air to the passenger compartment. The various structures and the manner in which they interface with the bus rooftop 11 will more fully described hereinafter.

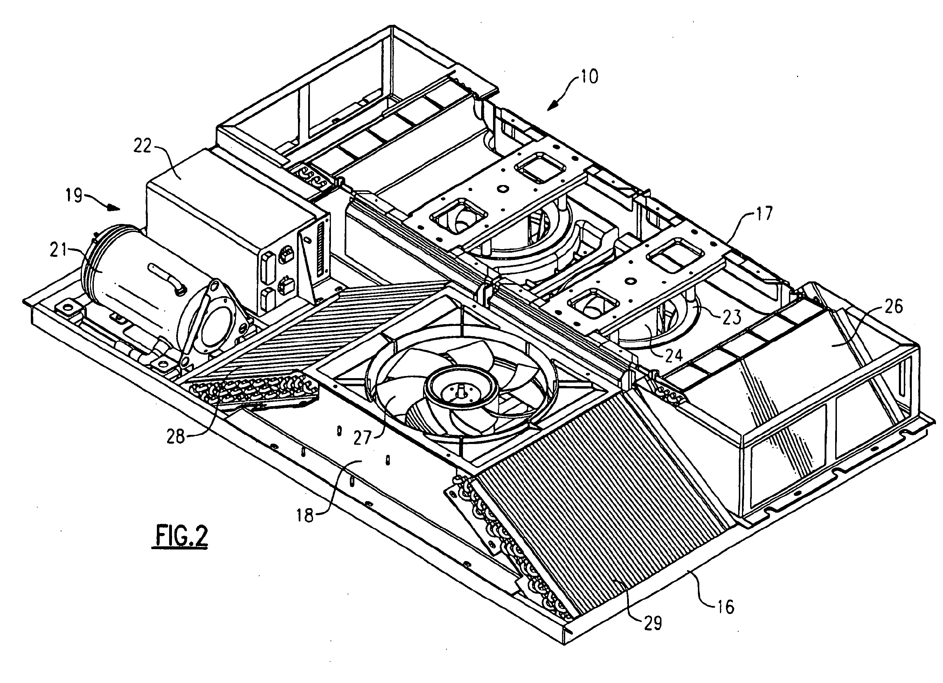

In Fig. 2, the module 10 is shown with its cover removed to include a frame 16 with an evaporator section 17 attached to one end thereof and a condenser section 18 attached to the other end thereof. Adjacent the condenser section 18 is a power section 19 which includes a compressor 21 and an inverter/controller 22. The manner in which they provided motive power to the refrigerant circuit and electrical power to the electrical components of the module 10 will be more fully described hereinafter.

The evaporator section 17 comprises a pair of identical units in abutting end-to-end relationship with each unit including an evaporator blower 23 with is evaporator blower motor 24, and an evaporator coil 26. Briefly, the evaporator blower 23 draws in return air from the passenger compartment of the bus, and fresh air from outside and passes a mixture of the two through the evaporator coil 26 to be conditioned, after which it flows back to the passenger compartment by way of the supply air ducts. This will be more fully described hereinafter.

Within the condenser section 18, there is provided a condenser fan 27 driven by an electric motor, and a pair of condenser coils 28 and 29. Briefly, the condenser fan draws air upwardly to create a vacuum below, which in turn causes fresh air to be drawn through the condenser coils 28 and 29 to condense the refrigerant flowing through the coils 28 and 29. The resulting warm air is then discharged upwardly to the atmosphere by the fan 27.

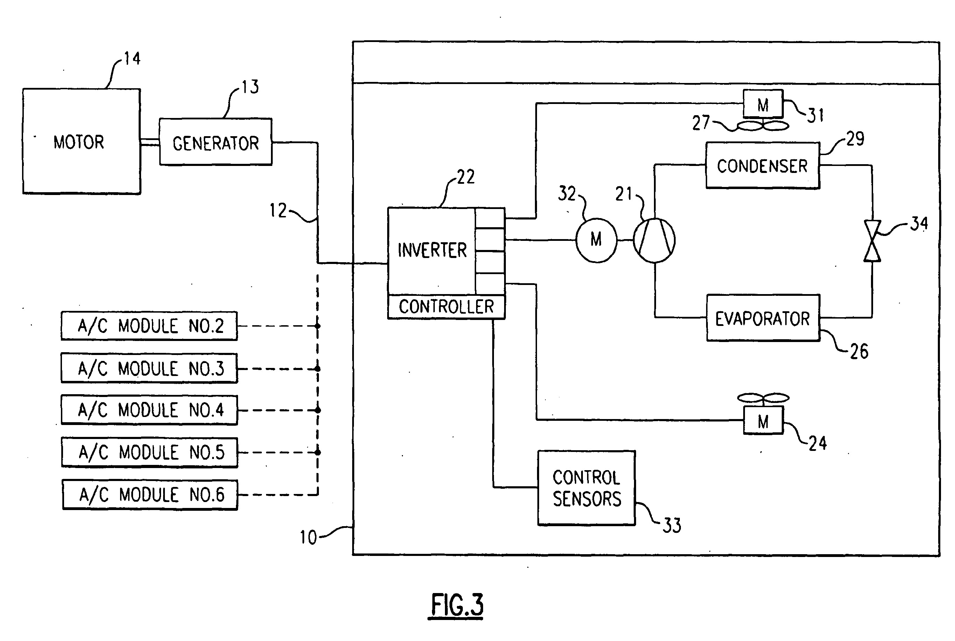

Referring now to Fig. 3, the module 10 is shown with its electrical connection by way of line 12 to the generator 13 and driving motor 14. The inverter/controller 22 receives AC power from the generator, or alternator, and, in turn provides discretely controlled AC power to the evaporator blower motor 24, the drive motor 31 of the condenser fan 27 and the drive motor 32 of the compressor 21. A plurality of control sensors, shown generally at 33 provide feedback to the inverter/controller 22 as necessary for it to control the AC power being delivered to the various drive motors.

As will be seen, the refrigeration circuit is a closed circuit through which the refrigerant flows from the compressor 21 to the condenser 29, an expansion valve 34, the evaporator 26 and finally back to the compressor 21. This is accomplished in a conventional manner.

It will be seen that the module 10 is self-contained with all of the necessary components, with the only input thereto being the electrical power by way of the electrical line 12. Other modules, indicated as numbers 2-6 are identically configured and are powered and controlled in the same manner.

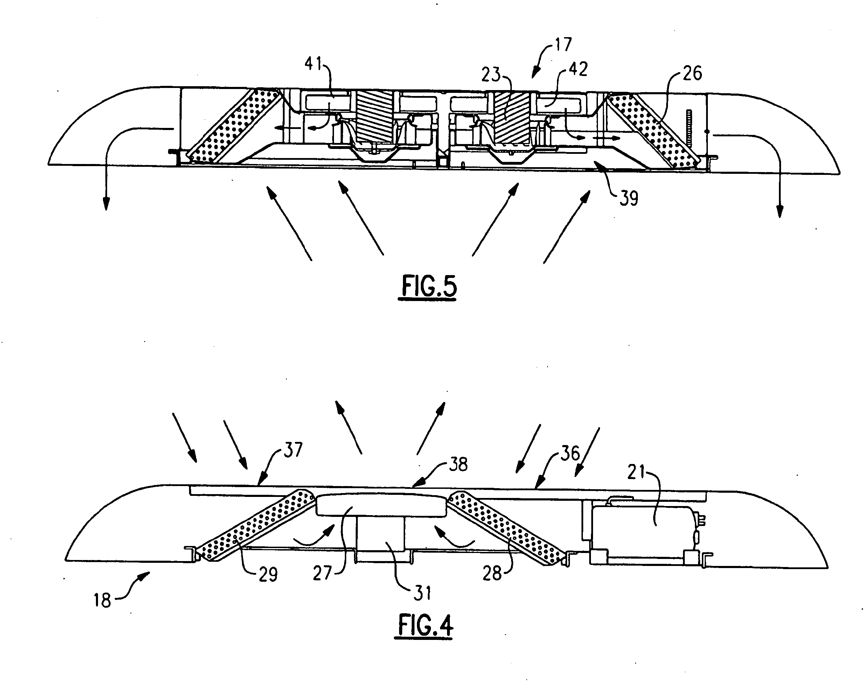

Returning now to the condenser section 18 as shown in Fig. 4, the flow of air as caused by the condenser fan 27 is shown by the arrows. Fresh air is drawn in through the fresh air intake openings 36 and 37, passes through the respective condenser coils 28 and 29 and then flow upwardly through the condenser fan 27 and the condenser outlet air opening 38 as shown.

Within the evaporator section 17 as shown in Fig. 5, the relatively warm return air flows upwardly from a return air opening (not shown) communicating with the passenger compartment and enters a return air plenum 39 of the evaporator section 17 as shown by the arrows. The evaporator blower 23 causes the return air to flow upwardly to its inlet at the top, and at the same time, fresh air may be brought in by way of a fresh air flap in a manner to be described hereinafter. A mixture of the two airflow streams is thus admitted at the intake of the evaporator blower 23 and caused to flow downwardly and outwardly as indicated by the arrows to the evaporator coils 26. After passing through the evaporator coil 26 it is then caused by a curved cowling to flow downwardly to a supply air duct leading to the passenger compartment. Thus, while the module is operating, there is a constant circuitous flow of return air out of the passenger compartment and of conditioned air back into the passenger compartment. The amount of return air that is discharged to the outside, and also the amount of fresh air that is brought into the circuit from the outside is controlled by the selective movement of the fresh air flaps as will be described hereinafter.

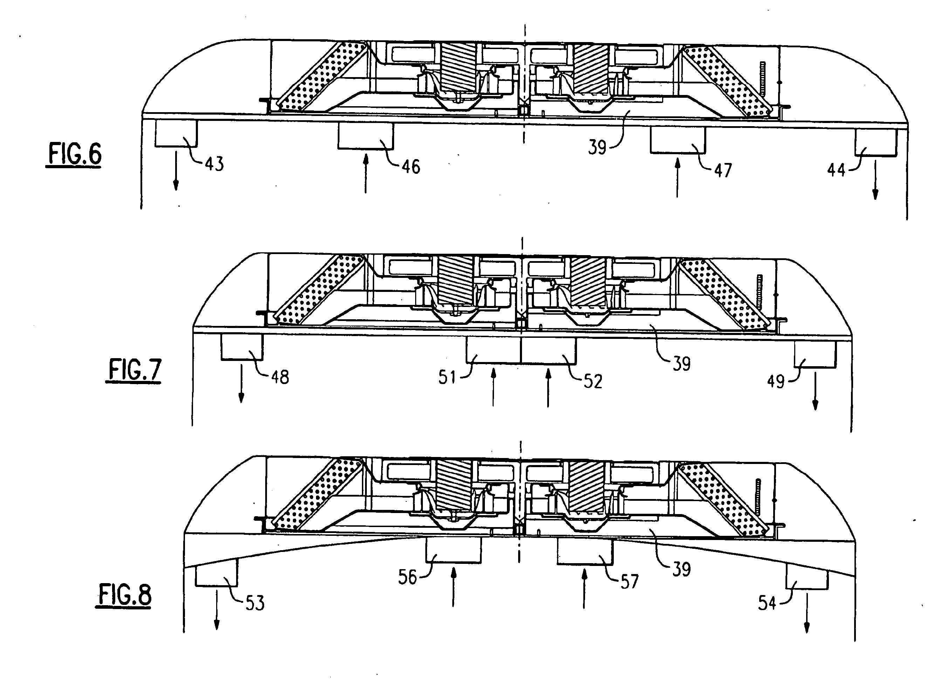

There are shown in Figs. 6-8, installations of the module 10 with various types of buses and associated return air and supply air openings. In Fig. 6, for example, a wide bus installation is shown wherein the existing ductwork within the bus includes supply air ducts 43 and 44 near the lateral sides of the bus, and return air openings 46 and 47 that are closer to the centerline of the bus, but are substantially spaced apart. Here it will be seen that the return air openings 46 and 47 communicate directly with the return air plenum 39 of the module 10, but at a position at near the outer end thereof.

In Fig. 7, which shows a narrow bus installation, again the supply air ducts 48 and 49 are near the transverse sides of the bus. But the return air openings 51 and 52 are abutting each other at the centerline of the bus. Again, the return air openings 51 and 52 fluidly communicate with the return air plenum 39, but at the other end thereof.

Finally, in Fig. 8 there is shown a curved top bus wherein the supply air ducts 53 and 54 are again near the transverse sides of the bus, but the return air openings 56 and 57 are in intermediate positions, relatively close to the centerline but substantially spaced apart. Again, the return air openings 56 and 57 fluidly communicate with the return air plenum 39, but at a position intermediate the two ends thereof.

It will thus be seen that the same identical module is so constructed and designed that it can accommodate any of these various installation requirements without modification of the module itself. That is, the conditioned air discharge opening 40 is sufficiently large in the transverse direction to accommodate the various supply air duct orientations, and, more importantly, the return air plenum 39 is relatively large in the transverse direction so as to accommodate each of the various types of return air opening configuration as shown.

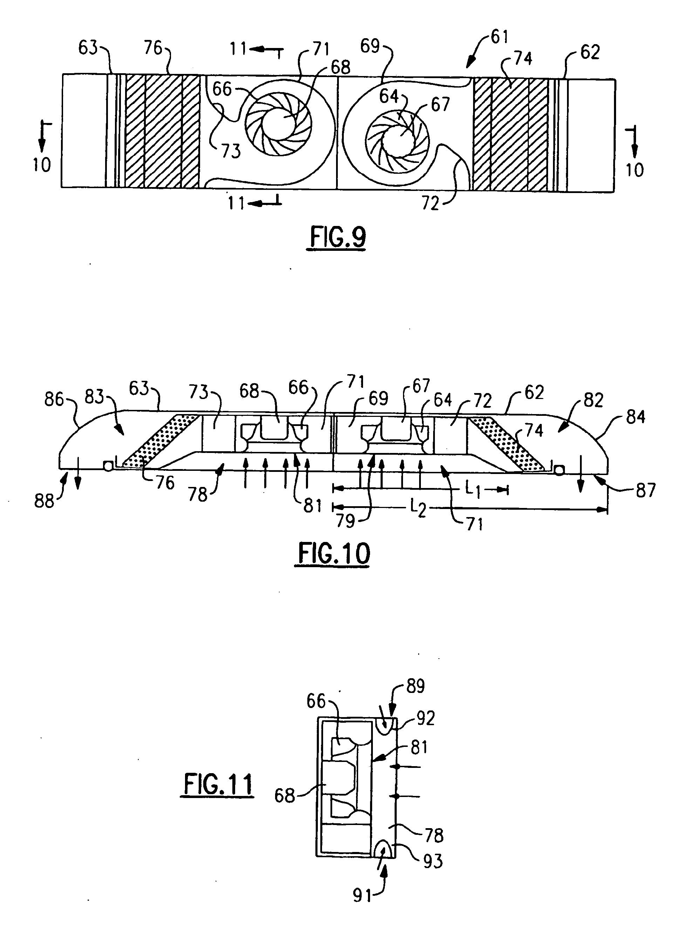

Referring now to Figs. 9-11, an alternate evaporator section is shown at 61 to include a pair of identical units 62 and 63 in back-to-back relationship with respect to the centerline of the bus. Centrifugal fans 64 and 66 driven by respective motors 67 and 68 are located near the centerline of the bus, and with their axis oriented vertically.

As will be seen, the fans 64 and 66 are surrounded by respective scrolls 69 and 71 having relatively short diffusers 72 and 73 leading to the evaporator coils 74 and 76, respectively.

As will be seen in Fig. 10, the fans 64 and 66 are raised so as to provide for the return air plenums 77 and 78, respectively, therebelow. It should be noted that the longitudinal length L₁ (i.e., the distance the plenum 39 extends laterally across the half-width of the bus) of the plenum 39 is substantial as compared with the width of the return air duct (see Figs. 6-8) and also as compared with the total lateral length of the unit L₂. The present design has a dimension of L₁ = 595mm. The dimension L₂ will vary depending on the particular installation. In this regard, the dimension x represents the lateral length of the unit structure between the return air plenum and the supply air discharge opening. This dimension will vary from a minimum of 130 mm to a maximum of 230mm. The lateral dimension of the supply air discharge opening will also vary from a minimum of 60 mm to a maximum of about 120 mm. Accordingly, the lateral length L₂ will vary from 785mm to 945mm. The ration of L₁/L₂ will therefore be in the range of 0.629 to 0.758mm. The feature of this relatively large ratio is important in allowing the use of the identical units for various rooftop installation requirements as discussed hereinabove.

In comparing the lateral length of the return air plenum with the lateral width of the return air opening it will be seen that the lateral length L₁ is substantially greater than the width w. Typically the width w of the return air opening is around 120-450mm. Considering then the ration of the two, the length of 595 mm is on the order of 1.322 to 1.983 times that of the width w of the return air opening.

Finally, comparing the length L₁ to the half-width of a bus, a typical bus is about 2150 mm wide, such that the ration of the unit length L₁ to a half-width of a typical bus is about 0.553. Thus, it can be said that the length L₁ is about half of the half width of a bus.

With the two level approach, i.e., with the return air plenums 77 and 78 being at one level, and with the fans 64 and 66 being at a higher level, the return air is drawn into the return air plenums 77 and 78 and then enters the fans 64 and 66 by way of inlets 79 and 81, respectively. The air then remains at the second level and is blown radially outwardly toward the coils 74 and 76, respectively.

The centrifugal fans 64 and 66 are relatively shallow in the vertical direction but relatively large in diameter. The drive motors 67 and 68 are shown in positions above the fans but may be positioned below the fans. The fan rotors may have backward curved, radial or forward curved blades. Located outboard the evaporator coils 74 and 76, are the pressure plenums 82 and 83 as partially defined by curved cowlings 84 and 86, respectively. Downstream of the pressure plenums 82 and 83 are the supply air discharge openings 87 and 88, respectively.

Referring now to Fig. 11, the return air is shown by the arrows at the right. On each side of the fan, a fresh air opening with an associated flap is provided to introduce fresh ambient air into the return air plenum 78 to be mixed with the return air prior to its entering into the fan 66. The fresh air openings are shown by numerals 89 and 91, whereas the flaps are indicated at 92 and 93, respectively. It will be recognized that the openings 89 and 91 are relatively small compared with the return air opening into the plenum 78. Accordingly, this design is intended to allow for a fractional quantity of fresh air to be drawn in and mixed with the return air passing through the fan. There is thus a blockage of a small quantity of return air flow when the flaps 92 and 93 are open, but even when fully opened, the flaps 92 and 93 do not provide for a large blockage of return air flow.

In operation, the return air flows into the plenum 78 with a fraction of fresh air being introduced into the openings 89 and 91 as desired. The mixture of air then passes through the fan 66 and is caused to flow outwardly through the scrolls 69 and 71 and the diffusers 72 and 73, respectively. After passing through the evaporator coils 74 and 76, the conditioned air flows into the pressure plenums 82 and 83, respectively and then through the supply air discharge openings 87 and 88 to be discharged to the passenger compartment.

Unlike a draw-through fan system of the prior art, wherein the cooled air comes off the fans as a high velocity jet flow blasting into the bus supply air ducts, the present design provides for low velocity, but high pressure flow in the pressure plenums 82 and 83. The openings, 87 and 88 can be, and preferably are, larger than the conventional openings for a draw-through fan in order to take advantage of the low velocity flow and lower losses. This may preferably take the form of rather narrow but relatively long slots through which the air is discharged.

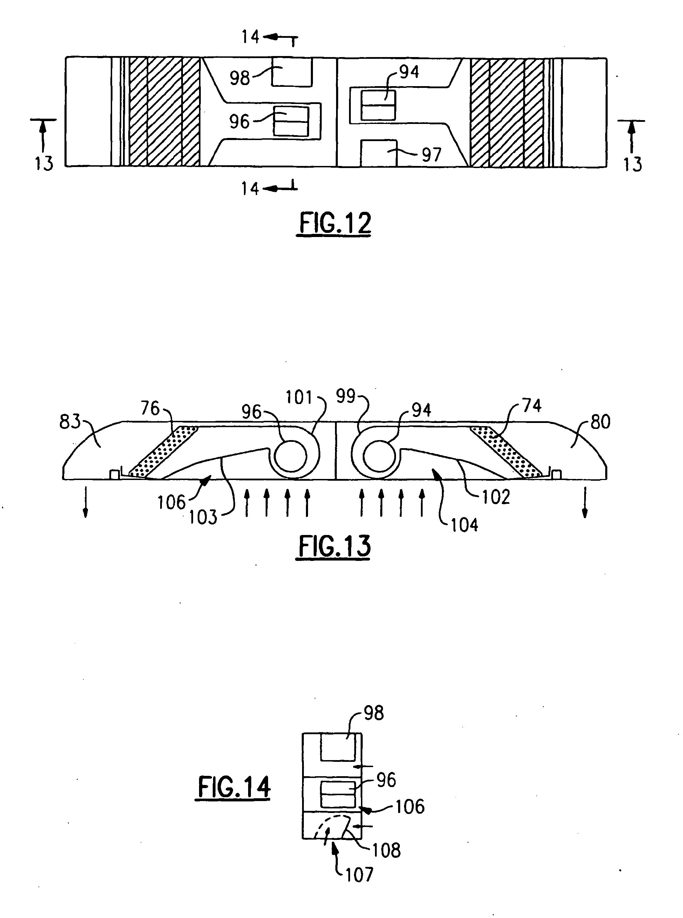

Referring now to Figs. 12-14, an alterative embodiment of the evaporator section is shown to include a similar blow through arrangement, but with the fans having their axes disposed in the horizontal plane as shown. The respective scrolls are shown at 99 and 101, and the diffusers at 102 and 103. The placement of the evaporator coils 74 and 76 are identical as in the previous embodiment, and the structure and function of the pressure plenums 82 and 83 are identical as previously described.

Because of the height limitations of the evaporator units, the diameter of the fans 94 and 96 are necessarily smaller than those for the fans with a vertical axes orientation. Thus, a forward curved blower wheel is desirable, and, as will be seen, they are of the double inlet type wherein air can enter from both ends of the fan. The diffusers 102 and 103 are relatively long as compared with their described diffusers for use with the vertical axes fans.

Again, return air plenums 104 and 106 are provided at a lower level of the units, and the fans 94 and 96 are provided at a second level for receiving the air and then blowing it outwardly to the coils 74 and 76. Like the earlier described design, the return air plenums 104 and 106 are longitudinally extensive and have substantially the same relative dimensions as described hereinabove with respect to the vertical axes fans.

Referring now to Fig. 14, the flow of return air is shown by the arrows at the right as flowing in to enter each end of the fan 96 as driven by the motor 98. In order to facilitate the introduction of fresh air to be mixed with the flow of return air, a fresh air opening 107 and associated flap 108 is provided in the one side as shown. The position of the flap 108 is selectively adjustable so as to bring fresh air into the system as desired. In a manner similar as described hereinabove, as the flap 108 is moved toward the fully opened position, it both uncovers the fresh air opening 107 and increasingly tends to decrease the flow of return air coming into the system. However, even when it is in the fully opened position, there is a relatively small percentage of the return air flow that is blocked.

In operation, the return air and fresh air come into the lower return air plenum 106, after which a mixture of the two flows upwardly into the two inlet openings on either side of the fan 96. The fan 96 then blows the air out from the scroll 101 and the diffuser 103 to the evaporator coil 76 where it is cooled, after which the air enters the pressure plenum 83 and is discharged, at a relatively high pressure and low velocity, to the supply air duct which carries it to the passenger compartment.

While the present invention has been particularly shown and described with reference to the preferred mode as illustrated in the drawings, it will be understood by one skilled in the art that various changes in detail may be effected therein without departing from the scope of the invention as defined by the claims.

## Claims

1. An air conditioning module (10) for a bus rooftop (11) of the type having at least one return air opening (46, 47) for conducting the flow of return air from the passenger compartment, and at least one supply air opening (43, 44) for conducting the flow of conditioned air to the passenger compartment, comprising:
a condenser section (18) having at least one condenser coil (28, 29) and a condenser fan (27) for causing ambient air to flow therethrough; and
an evaporator section (17) having at least one evaporator coil (26) and at least one evaporator fan (23; 64, 66) for causing return air to flow serially from said return air opening (46, 47), through an evaporator fan (23; 64, 66), through an evaporator coil (26), and to at least one supply air opening(43, 44);
a return air plenum (39) disposed in a lower portion of said evaporator section (17) and adapted to receive a flow of return air from the return air opening (46, 47), said return air plenum (39) fluidly communicating with said evaporator fan (23; 64, 66), and
at least one fresh air inlet opening (89, 91) which fluidly communicates fresh air into said return air plenum (78);
wherein said at least one fresh air opening (89, 91) has an associated flap (92, 93) for selectively controlling the volume of fresh air that flows through said fresh air inlet opening, said flap being so located and operable that it simultaneously changes the respective airflow paths of the incoming fresh air and return air to reduce the volume of airflow from said return air opening as the volume of fresh airflow is increased and in that said evaporator fan (23; 64, 66) is located directly above said return air plenum (39, 78).

2. An air conditioning module as set forth in claim 1 wherein said evaporator fan (64, 66) is of the centrifugal type.

3. An air conditioner as set forth in claim 2 wherein said evaporator fan (64, 66) has a vertically oriented axis.

4. An air conditioning module as set forth in claim 3 wherein said centrifugal fan (64, 66) has an inlet facing downwardly and adjacent to said return air compartment (78).

5. An air conditioning module as set forth in claim 2 and including a scroll (69, 71) and a diffuser (72, 73) disposed between the evaporator fan (64, 66) and evaporator coil (74, 76).

6. An air conditioning module as set forth in claim 2 wherein said centrifugal fan (64, 66) has a horizontally oriented axis.

7. An air conditioning module as set forth in claim 6 wherein said centrifugal fan (64, 66) has an inlet on each end thereof.

8. An air conditioning module as set forth in claim 6 wherein said centrifugal fan (64, 66) has a forward curved blower wheel.

9. An air conditioning module as set forth in claim 3 wherein said fan (64, 66) is of the backward curved type.

10. An air conditioning module as set forth in claim 3 wherein a drive motor (67, 68) is located above said fan (64, 66) and operably connected thereto.

11. An air conditioning module as set forth in claim 1 wherein said at least one fresh air inlet opening (89, 91) comprises a pair of fresh air inlet openings (89, 91) located on opposite sides of said fan (66), with each having an associated flap.

12. A bus rooftop air conditioner module for a bus having a return air opening (46, 47) comprising:
a frame;
a condenser section (18) mounted to said frame and having a pair of condenser coils (28, 29) with the fan (27) disposed therebetween for drawing outside air through each of said pair of condenser coils (28, 29) and discharging it to the outside;
an evaporator section (170 mounted to said frame and having at least one fan (23; 64, 66) for circulating return air serially from a passenger compartment of a bus, through said fan (23; 64, 66), through an evaporator coil (26) to a supply air duct (43, 44) and to the passenger compartment,
including a return air plenum (39) disposed in a lower portion of said evaporator section (17) and adapted to receive a flow of return air from the return air opening (46, 47), said return air plenum (390 fluidly communicating with said evaporator fan (23; 64, 66), and
including at least one fresh air inlet (89, 91) fluidly communicating fresh air into said return air plenum; wherein
said inlet including an associated flap (92, 93) for selectively varying the volume of flow through said at least one fresh air inlet (89, 91)
said flap so being located and operable that it simultaneously changes the respective airflow paths of the incoming fresh air and return air to reduce the volume of airflow from said return air opening as the volume of fresh airflow is increased; and
wherein said fan (23; 64, 66) is located directly above said return air plenum.

13. A bus rooftop air conditioner module as set forth in claim 12 wherein said fan (64, 66) is of the centrifugal type.

14. A bus rooftop air conditioner module as set forth in claim 13 wherein said centrifugal fan (64, 66) has a vertically oriented axis.

15. A bus rooftop air conditioner module as set forth in claim 14 wherein said fan (64, 66) has an inlet facing downwardly and adjacent to said return air plenum (78).

16. A bus rooftop air conditioner module as set forth in claim 13 and including a scroll (69, 71) and diffuser (72, 73) disposed between the fan (64, 66) and the coil (74, 76).

17. A bus rooftop air conditioner module as set forth in claim 13 wherein said centrifugal fan (64, 66) has a horizontally oriented axis.

18. A bus rooftop air conditioner module as set forth in claim 13 wherein said centrifugal fan (64, 66) has an inlet on each end thereof.

19. A bus rooftop air conditioner module as set forth in claim 13 wherein said centrifugal fan (64, 66) has a forward curved blower wheel.

20. A bus rooftop air conditioner module as set forth in claim 13 wherein said fan (64, 66) is backward curved.

21. A bus rooftop air conditioner module as set forth in claim 13 and including a motor (67, 68) disposed above and operably connected to drive said fan (64, 66).

22. A bus rooftop air conditioner module as set forth in claim 11 wherein said at least one fresh air inlet opening (89, 91) comprises a pair of fresh air inlet openings (89, 91) located on opposite sides of said fan (66), with each opening having an associated flap.

23. A bus rooftop air conditioner module as set forth in claim 11 and including a refrigeration circuit that includes one of said condensing coils (29) and said evaporator coil (26), a compressor (21) and an expansion valve (34).

24. A bus rooftop air conditioner module as set forth in claim 23 and including an inverter (22) electrically connected to said compressor (21) and to drive motors (31, 24) for said condenser and evaporator fans.

25. A bus rooftop air conditioner module as set forth in claim 11 wherein said module (10) includes two identical halves abutted in end to end relationship with each half having a fan and an evaporator coil.

## Patentansprüche

1. Klimaanlagenmodul (10) für eine Busdachoberseite (11) vom Typ mit mindestens einer Rückluftöffnung (46, 47) für das Leiten der Rückluftströmung aus dem Passagierabteil und mindestens einer Zuluftöffnung (43, 44) für das Leiten der Strömung von klimatisierter Luft zu dem Passagierabteil, aufweisend:
einen Kondensatorabschnitt (18) mit mindestens einer Kondensatorwindung (28, 29) und einem Kondensatorventilator (27), um Umgebungsluft dadurch strömen zu lassen; und
einen Verdampferabschnitt (17) mit mindestens einer Verdampferwindung (26) und mindestens einem Verdampferventilator (23; 64, 66), um Rückluft von der Rückluftöffnung (46, 47) nacheinander durch einen Verdampferventilator (23; 64, 66), durch eine Verdampferwindung (26) und zu der mindestens einen Zuluftöffnung (43, 44) strömen zu lassen,
ein Rückluftplenum (39), der in einem unteren Teil des Verdampferabschnitts angeordnet und dafür ausgebildet ist, eine Rückluftströmung von der Rückluftöffnung (46, 47) aufzunehmen, wobei der Rückluftsammelraum (39) in Fluidkommunikation mit dem Verdampferventilator (23; 64, 66) ist, und
mindestens eine Frischlufteinlassöffnung (89, 91), die Fluidverbindung von Frischluft in dem Rückluftplenum (78) schafft;
wobei die mindestens eine Frischluftöffnung (89, 91) eine zugeordnete Klappe (92, 93) für das selektive Steuern des Volumens der durch die Frischlufteinlassöffnung strömenden Frischluft hat,
wobei die Klappe so angeordnet und betriebsfähig ist, dass sie die entsprechenden Luftströmungswege der eintretenden Frischluft und Rückluft gleichzeitig ändert, um das Volumen der Luftströmung von der Rückluftöffnung zu reduzieren, wenn das Volumen der Frischluftströmung zunimmt, und wobei sich der Verdampferventilator (23; 64, 66) direkt über dem Rückluftplenum (39, 78) befindet.

2. Klimaanlagenmodul nach Anspruch 1, wobei der Verdampferventilator (64, 66) vom Zentrifugaltyp ist.

3. Klimaanlage nach Anspruch 2, wobei der Verdampferventilator (64, 66) eine senkrecht ausgerichtete Achse hat.

4. Klimaanlagenmodul nach Anspruch 3, wobei der Zentrifugalventilator (64, 66) einen Einlass hat, der nach unten gewandt und dem Rückluftabteil (78) benachbart ist.

5. Klimaanlagenmodul (10) nach Anspruch 2 und aufweisend eine Spirale (69, 71) und einen Diffusor (72, 73), zwischen dem Verdampferventilator (64, 66) und der Verdampferwindung (74, 76) angeordnet.

6. Klimaanlagenmodul nach Anspruch 2, wobei der zentrifugale Ventilator (64, 66) eine horizontal ausgerichtete Achse hat.

7. Klimaanlagenmodul nach Anspruch 6, wobei der Zentrifugalventilator (64, 66) einen Einlass an jedem seiner Enden hat.

8. Luftanlagenmodul (10) nach Anspruch 6, wobei der Zentrifugalventilator (64, 66) ein nach vorne gekrümmtes Gebläserad hat.

9. Klimaanlagenmodul (10) nach Anspruch 3, wobei der Ventilator (64, 66) vom nach hinten gekrümmten Typ ist.

10. Klimaanlagenmodul nach Anspruch 3, wobei sich ein Antriebsmotor (67, 68) über dem Ventilator (64, 66) befindet und betriebsfähig damit verbunden ist.

11. Klimaanlagenmodul nach Anspruch 1, wobei die mindestens eine Frischlufteinlassöffnung (89, 91) ein Paar Frischlufteinlassöffnungen (89, 91) aufweist, die sich an gegenüberliegenden Seiten des Ventilators (66) befinden, wobei jede eine zugeordnete Klappe hat.

12. Klimaanlagenmodul für eine Busdachoberseite mit einer Rückluftöffnung (46, 47), aufweisend:
einen Rahmen;
einen an den Rahmen montierten Kondensatorabschnitt (18) mit einem Paar Kondensatorwindungen (28, 29), wobei der Ventilator (27) dazwischen angeordnet ist, um Außenluft durch jede von dem Paar Kondensatorwindungen (28, 29) zu ziehen und sie ins Freie abzulassen; und
einen an den Rahmen montierten Verdampferabschnitt (17) mit mindestens einem Ventilator (23; 64, 66) für das Zirkulieren von Rückluft von einem Fahrgastraum eines Busses nacheinander durch den Ventilator (23; 64, 66), durch eine Verdampferwindung (26) zu einer Zuluftöffnung (43, 44) und zu dem Fahrgastraum,
aufweisend ein Rückluftplenum (39), der in einem unteren Teil des Verdampferabschnitts (17) angeordnet und dafür ausgebildet ist, eine Rückluftströmung von der Rückluftöffnung (46, 47) aufzunehmen, wobei der Rückluftsammelraum (39) in Fluidkommunikation mit dem Verdampferventilator (23; 64, 66) ist, und
aufweisend mindestens einen Frischlufteinlass (89, 91), der dem Rückluftplenum in Fluidkommunikation Frischluft zuführt;
wobei
der Einlass eine zugeordnete Klappe (92, 93) für das selektive Variieren des Volumens der Strömung durch den Frischlufteinlass (89, 91) aufweist,
wobei die Klappe so angeordnet und dazu betriebsfähig ist, die entsprechenden Luftströmungswege der eintretenden Frischluft und der Rückluft gleichzeitig zu ändern, um das Volumen der Luftströmung von der Rückluftöffnung zu reduzieren,
wenn das Volumen der Frischluftströmung zunimmt, und wobei sich der Ventilator (23; 64, 66) direkt über dem Rückluftplenum befindet.

13. Klimaanlagenmodul für eine Busdachoberseite nach Anspruch 12, wobei der Ventilator (64, 66) vom Zentrifugaltyp ist.

14. Klimaanlagenmodul für eine Busdachoberseite nach Anspruch 13, wobei der Zentrifugalventilator (64, 66) eine senkrecht ausgerichtete Achse hat.

15. Klimaanlagenmodul für eine Busdachoberseite nach Anspruch 14, wobei der Ventilator (64, 66) einen Einlass hat, der nach unten gewandt und dem Rückluftplenum (78) benachbart ist.

16. Klimaanlagenmodul für eine Busdachoberseite nach Anspruch 13 und aufweisend eine Spirale (69, 71) und einen Diffusor (72, 73), der zwischen dem Ventilator (64, 66) und der Windung (74, 76) angeordnet ist.

17. Klimaanlagenmodul für eine Busdachoberseite nach Anspruch 13, wobei der Zentrifugalventilator (64, 66) eine horizontal ausgerichtete Achse hat.

18. Klimaanlagenmodul für eine Busdachoberseite nach Anspruch 13, wobei der Zentrifugalventilator (64, 66) einen Einlass an jedem seiner Ende hat.

19. Klimaanlagenmodul für eine Busdachoberseite nach Anspruch 13, wobei der Zentrifugalventilator (64, 66) ein nach vorne gekrümmtes Gebläserad hat.

20. Klimaanlagenmodul für eine Busdachoberseite nach Anspruch 13, wobei der Ventilator (64, 66) nach hinten gekrümmt ist.

21. Klimaanlagenmodul für eine Busdachoberseite nach Anspruch 13 und aufweisend einen Motor (67, 68), der über dem Ventilator (64, 66) angeordnet und betriebsfähig mit ihm verbunden ist, um ihn anzutreiben.

22. Klimaanlagenmodul für eine Busdachoberseite nach Anspruch 11, wobei die mindestens eine Frischlufteinlassöffnung (89, 91) ein Paar Frischlufteinlassöffnungen (89, 91) aufweist, die sich an gegenüberliegenden Seiten des Ventilators (66) befinden, wobei jede Öffnung eine zugeordnete Klappe hat.

23. Klimaanlagenmodul für eine Busdachoberseite nach in Anspruch 11 und aufweisend einen Kühlkreislauf, der eine der Kondensatorwindungen (29) und die Verdampferwindung (26), einen Kompressor (21) und ein Expansionsventil (34) aufweist.

24. Klimaanlagenmodul für eine Busdachoberseite nach Anspruch 23 und aufweisend einen Inverter (22), der elektrisch mit dem Kompressor (21) und mit Antriebsmotoren (31, 24) für den Kondensator- und den Verdampferventilator verbunden ist.

25. Klimaanlagenmodul für eine Busdachoberseite nach Anspruch 11, wobei das Modul (10) zwei identische Hälften aufweist, die in einer Ende-an-Ende-Beziehung aneinander stoßen, wobei jede Hälfte einen Ventilator und eine Verdampferwindung hat.

## Revendications

1. Module de climatisation (10) pour un toit d'autobus (11) du type ayant au moins une ouverture d'air de retour (46, 47) pour conduire le flux d'air de retour du compartiment passager, et au moins une ouverture d'air d'alimentation (43, 44) pour conduire le flux d'air conditionné vers le compartiment passager, comprenant :
une section de condenseur (18) ayant au moins un serpentin de condenseur (28, 29) et un ventilateur de condenseur (27) pour faire circuler l'air ambiant à travers celui-ci ; et
une section d'évaporateur (17) ayant au moins un serpentin d'évaporateur (26) et au moins un ventilateur d'évaporateur (23 ; 64, 66) pour faire circuler l'air de retour en série de ladite ouverture d'air de retour (46, 47), à travers un ventilateur d'évaporateur (23 ; 64, 66), à travers un serpentin d'évaporateur (26), et vers au moins une ouverture d'air d'alimentation (43, 44) ;
un plénum d'air de retour (39) disposé dans une portion inférieure de ladite section d'évaporateur (17) et adapté pour recevoir un flux d'air de retour provenant de l'ouverture d'air de retour (46, 47), ledit plénum d'air de retour (39) communiquant fluidiquement avec ledit ventilateur d'évaporateur (23 ; 64, 66), et
au moins une ouverture d'admission d'air frais (89, 91) qui communique fluidiquement de l'air frais dans ledit plénum d'air de retour (18) ;
où ladite au moins une ouverture d'air frais (89, 91) comporte un battant associé (92, 93) pour réguler sélectivement le volume d'air frais qui circule à travers ladite ouverture d'admission d'air frais, ledit battant étant situé et pouvant fonctionner de telle sorte qu'il modifie simultanément les trajets de flux d'air respectifs de l'air frais entrant et de l'air de retour afin de réduire le volume du flux d'air provenant de ladite ouverture d'air de retour à mesure que le volume du flux d'air frais est augmenté et en ce que ledit ventilateur d'évaporateur (23 ; 64, 66) est situé directement au-dessus dudit plénum d'air de retour (39, 78).

2. Module de climatisation selon la revendication 1, dans lequel ledit ventilateur d'évaporateur (64, 66) est de type centrifuge.

3. Climatiseur selon la revendication 2, dans lequel ledit ventilateur d'évaporateur (64, 66) présente un axe orienté verticalement.

4. Module de climatisation selon la revendication 3, dans lequel ledit ventilateur centrifuge (64, 66) comporte une admission tournée vers le bas et adjacente audit compartiment d'air de retour (78).

5. Module de climatisation selon la revendication 2, incluant une spirale (69, 71) et un diffuseur (72, 73) disposés entre le ventilateur d'évaporateur (64, 66) et le serpentin d'évaporateur (74, 76).

6. Module de climatisation selon la revendication 2, dans lequel ledit ventilateur centrifuge (64, 66) présente un axe orienté horizontalement.

7. Module de climatisation selon la revendication 6, dans lequel ledit ventilateur centrifuge (64, 66) comporte une admission sur chacune de ses extrémités.

8. Module de climatisation selon la revendication 6, dans lequel le ventilateur centrifuge (64, 66) comporte une roue de soufflante incurvée vers l'avant.

9. Module de climatisation selon la revendication 3, dans lequel ledit ventilateur (64, 66) est de type incurvé vers l'arrière.

10. Module de climatisation selon la revendication 3, dans lequel un moteur d'entraînement (67, 68) est situé au-dessus dudit ventilateur (64, 66) et raccordé fonctionnellement à celui-ci.

11. Module de climatisation selon la revendication 1, dans lequel ladite au moins une ouverture d'admission d'air frais (89, 91) comprend une paire d'ouvertures d'admission d'air frais (89, 91) situées sur des côtés opposés dudit ventilateur (66), chacune d'entre elles comportant un battant associé.

12. Module de climatisation de toit d'autobus pour un autobus ayant une ouverture d'air de retour (46, 47) comprenant :
un cadre ;
une section de condenseur (18) montée sur ledit cadre et comportant une paire de serpentins de condenseur (28, 29) avec le ventilateur (27) disposé entre eux pour tirer l'air extérieur à travers chaque serpentin de ladite paire de serpentins de condenseur (28, 29) et l'évacuer vers l'extérieur ;
une section d'évaporateur (17) montée sur ledit cadre et comportant au moins un ventilateur (23 ; 64, 66) pour faire circuler l'air de retour en série à partir d'un compartiment passager d'un autobus, à travers ledit ventilateur (23 ; 64, 66), à travers un serpentin d'évaporateur (26) vers une conduite d'air d'alimentation (43, 44) et vers le compartiment passager,
incluant un plénum d'air de retour (39) disposé dans une portion inférieure de ladite section d'évaporateur (17) et adapté pour recevoir un flux d'air de retour provenant de l'ouverture d'air de retour (46, 47), ledit plénum d'air de retour (39) communiquant fluidiquement avec ledit ventilateur d'évaporateur (23 ; 64, 66), et
incluant au moins une admission d'air frais (89, 91) communiquant fluidiquement de l'air frais dans ledit plénum d'air de retour ; où ladite admission inclut un battant associé (92, 93) pour faire varier sélectivement le volume de circulation à travers ladite au moins une admission d'air frais (89, 91),
ledit battant est également situé et fonctionnel de sorte qu'il modifie simultanément les trajets de flux d'air respectifs de l'air frais entrant et de l'air de retour pour réduire le volume d'un flux d'air provenant de ladite ouverture d'air de retour à mesure que le volume de flux d'air frais est augmenté ; et
où ledit ventilateur (23 ; 64, 66) est situé directement au-dessus dudit plénum d'air de retour.

13. Module de climatisation de toit d'autobus selon la revendication 12, dans lequel ledit ventilateur (64, 66) est de type centrifuge.

14. Module de climatisation de toit d'autobus selon la revendication 13, dans lequel ledit ventilateur centrifuge (64, 66) présente un axe orienté verticalement.

15. Module de climatisation de toit d'autobus selon la revendication 14, dans lequel ledit ventilateur (64, 66) comporte une admission tournée vers le bas et adjacente audit plénum d'air de retour (78).

16. Module de climatisation de toit d'autobus selon la revendication 13, incluant une spirale (69, 71) et un diffuseur (72, 73) disposés entre le ventilateur d'évaporateur (64, 66) et le serpentin d'évaporateur (74, 76).

17. Module de climatisation de toit d'autobus selon la revendication 13, dans lequel ledit ventilateur centrifuge (64, 66) présente un axe orienté horizontalement.

18. Module de climatisation de toit d'autobus selon la revendication 13, dans lequel ledit ventilateur centrifuge (64, 66) comporte une admission sur chacune de ses extrémités.

19. Module de climatisation de toit d'autobus selon la revendication 13, dans lequel le ventilateur centrifuge (64, 66) comporte une roue de soufflante incurvée vers l'avant.

20. Module de climatisation de toit d'autobus selon la revendication 13, dans lequel ledit ventilateur (64, 66) est incurvé vers l'arrière.

21. Module de climatisation de toit d'autobus selon la revendication 13, incluant un moteur (67, 68) disposé au-dessus dudit ventilateur (64, 66) et raccordé fonctionnellement à celui-ci pour l'entraîner.

22. Module de climatisation de toit d'autobus selon la revendication 11, dans lequel ladite au moins une ouverture d'admission d'air frais (89, 91) comprend une paire d'ouvertures d'admission d'air frais (89, 91) situées sur des côtés opposés dudit ventilateur (66), chacune d'entre elles comportant un battant associé.

23. Module de climatisation de toit d'autobus selon la revendication 11, incluant un circuit de réfrigération qui inclut un élément parmi lesdits serpentins de condenseur (29) et ledit serpentin d'évaporateur (26), un compresseur (21) et une vanne de détente (34).

24. Module de climatisation de toit d'autobus selon la revendication 23, incluant un onduleur (22) électriquement connecté audit compresseur (21) pour entraîner des moteurs (31, 24) pour lesdits ventilateurs de condenseur et d'évaporateur.

25. Module de climatisation de toit d'autobus selon la revendication 11, dans lequel ledit module (10) inclut deux moitiés identiques en butée en relation bout à bout, chaque moitié comportant un ventilateur et un serpentin d'évaporateur.
